Europäisches Patentamt

European Patent Office

Office européen des brevets

(11) Publication number: **0 376 759**
**A2**

## (12) EUROPEAN PATENT APPLICATION

(21) Application number: **89313719.0**

(22) Date of filing: **29.12.89**

(51) Int. Cl.⁵: **G02F 1/133**

(30) Priority: **29.12.88 JP 334133/88**
**28.08.89 JP 221206/89**

(43) Date of publication of application:
**04.07.90 Bulletin 90/27**

(84) Designated Contracting States:
**DE FR GB NL**

(71) Applicant: **SHARP KABUSHIKI KAISHA**
**22-22 Nagaike-cho Abeno-ku**
**Osaka 545(JP)**

(72) Inventor: **Satoh, Tomotoshi**
**4-5-28, Hannan-cho Abeno-ku**
**Osaka-shi Osaka(JP)**
Inventor: **Yoshida, Hirokazu**
**4-1-6-202, Nishi-suminoe Suminoe-ku**
**Osaka-shi Osaka(JP)**
Inventor: **Takeda, Makoto**
**2-3-4-904, Omiya-cho**
**Nara-shi Nara-ken(JP)**

(74) Representative: **Ranson, Arthur Terence et al**
**W.P. Thompson & Co. Coopers Building**
**Church Street**
**Liverpool L1 3AB(GB)**

(54) Liquid crystal display apparatus.

(57) A liquid crystal display apparatus comprises a liquid crystal display panel; an IC disposed on the display panel and incorporating a driving circuit for driving the display panel; and a circuit pattern (12,14a) connected to a terminal of the IC is disclosed. In one embodiment, a portion of a circuit pattern connected to a power supply terminal (23,24) constitutes one of the electrodes of a capacitor so that a capacitor is connected to the circuit pattern. In another embodiment, the resistance of a circuit pattern (18) connected to an input terminal (13a,13d) of the IC is greater than that of a circuit pattern connected to a power supply terminal (13b,13c) of the IC.

Fig. 2

## LIQUID CRYSTAL DISPLAY APPARATUS

This invention relates to a liquid crystal display apparatus having a liquid crystal display panel on which is disposed an IC for driving the display panel, and more particularly to an improvement of a circuit pattern connected to a terminal of an IC for driving a display panel.

A liquid crystal display apparatus generally comprises a liquid crystal display panel which is formed on a glass substrate, and a plurality of ICs which incorporate a circuit for driving the liquid crystal display panel. For the sake of simplicity, hereinafter, only that portion of a liquid crystal display apparatus on which one driving IC is disposed is described, and such an IC is referred to as "a driving IC". Conventionally, a driving IC is mounted on a printed circuit board or is formed as a so-called TAB-IC, and output terminals of the IC and terminals of the display panel are inter-connected by a thermoplastic heat seal member having conductive portions in the former case, or by an anisotropic conductive film in the latter case.

On the other hand, dot-matrix type liquid crystal display apparatuses having an increased number of fine pixels have been developed, resulting in that the number of terminals to be connected with terminals of a driving IC is substantially increased and the pitches of the terminals are very fine. This causes the connection between the driving IC and the display panel to become very difficult to perform.

In view of this situation, a COG (Chip On Glass) type liquid crystal display apparatus in which a driving IC is mounted on a liquid crystal display panel by a conductive adhesive or photosetting resin has been recently developed.

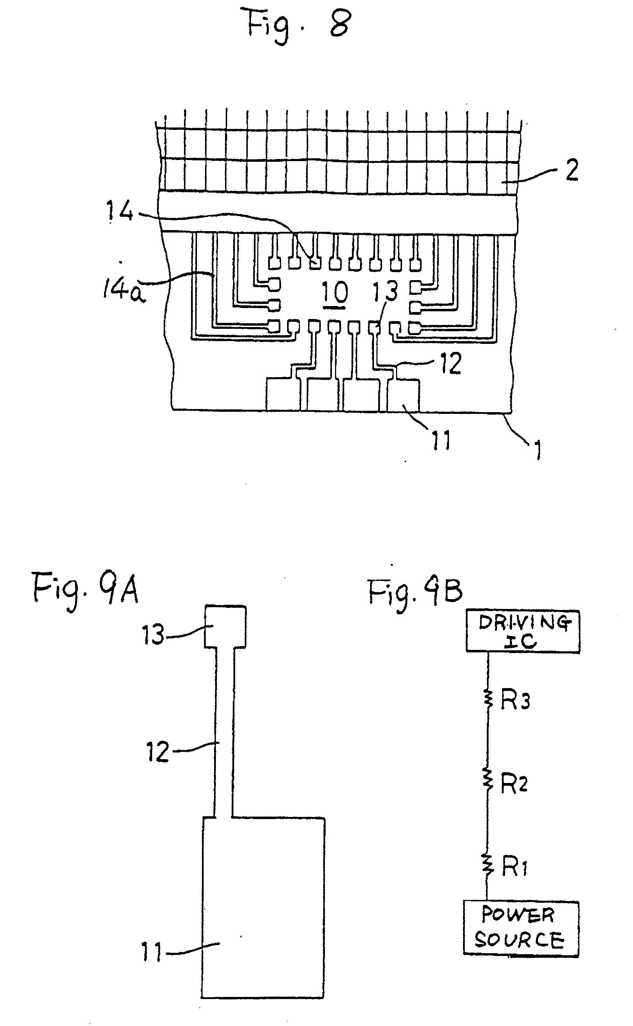

Figure 8 of the accompanying drawings illustrates a COG type liquid crystal display apparatus. The apparatus shown in Fig. 8 comprises a display portion 2 disposed on a liquid crystal display panel 1, and a IC mount area 10 at which a driving IC (not shown) is mounted. The IC mount area 10 is disposed at the periphery of the display panel 1, In the IC mount area 10, lands 13 and 14, circuit patterns 12 and 14a, and connecting pads 11 are formed. The lands 13 are to be connected to input terminals or power supply terminals of a driving IC, and the lands 14 to output terminals of the driving IC. The circuit patterns 12 connect the lands 13 with the connecting pads 11 to which lines from external apparatuses such as a power source and a signal input apparatus are connected. The circuit patterns 14a connect the lands 14 with the display portion 2. Figure 9A shows schematically a circuit portion consisting of one land 13, one circuit pattern 12 and one pad 11.

When a driving IC is mounted on the IC mount area 10 and the terminals of the IC are connected to the lands 13 and 14, the equivalent circuit of the circuit of Fig. 9A can be shown by a series circuit of three resistance components $R_1$ to $R_3$ as shown in Fig. 9B. Resistance $R_1$ represents the resistance of the connection between the pad 11 and an external apparatus, resistance $R_2$ the total resistance of the pad 11, circuit pattern 12 and land 13, and resistance $R_3$ the resistance of the connection between the driving IC and the lands 13. When a current flows through the circuit of Fig. 9A, the voltage is dropped by resistance $R_1$ to $R_3$, causing problems in that the driving IC erroneously functions and the image quality of the display panel 2 is degraded. These problems become more marked with an increase of the number of pixels, minuteness of pixels and the number of output terminals of a driving IC.

Generally, the current flowing through the power supply terminals of a driving IC is larger than that flowing through the input terminals of the IC. Therefore, the level of the voltage drop caused by the resistance of the circuit pattern connected to a power supply terminal is greater than that of the voltage drop caused by the resistance of the circuit pattern connected to an input terminal of the IC. This results in that the level of the voltage applied to a power supply terminal may be lower than the level of a signal applied to a signal input terminal. When the voltage level of a signal input terminal of a driving IC is higher than that of a power supply terminal, the driving IC operates unstably.

As previously mentioned, a liquid display apparatus comprises a plurality of driving ICs. These ICs are electrically interconnected via a cascade line or the like. If one of the driving ICs mounted on a display panel becomes faulty because of an excessive level input, the signal level of the faulty IC may become excessive so that this signal of excessive level is applied to normal ICs, thereby sequentially damaging these normal ICs causing them to become faulty too.

The liquid crystal display apparatus according to one aspect of this invention, which overcomes the above-discussed and numerous other disadvantages and deficiencies of the prior art, comprises a liquid crystal display panel; an IC disposed on said display panel and incorporating a driving circuit for driving said display panel; and a circuit pattern connected to a terminal of said IC, and is characterised in that said display apparatus further comprises an impedance means which is electrically connected to said circuit pattern.

In one embodiment, the terminal is a power supply terminal of said IC, and said impedance means comprises a capacitor.

In a preferred embodiment, one of the electrodes of said capacitor consists of a portion of said circuit pattern.

In another embodiment, the terminal is a power supply terminal of said IC, and said impedance means comprises two or more capacitors.

Preferably, one of the electrodes of each of said capacitors consists of a portion of said circuit pattern.

The capacitors can be connected in series or in parallel.

In a further embodiment, the terminal is a power supply terminal of said IC, and said impedance means comprises a resistor.

Preferably, the resistor is formed as a portion of said circuit pattern.

Alternatively, the resistor is formed by a transparent conductive material.

The liquid crystal display apparatus according to another aspect of the invention comprises: an IC disposed on said display panel and incorporating a driving circuit for driving said display panel; and a plurality of circuit patterns connected to terminals of said IC, and is characterized in that said display apparatus further comprises resistors which are formed in said circuit patterns.

In one embodiment, the resistors are formed as the circuit patterns connected to input terminals of said IC.

In another embodiment, the resistors are formed as the circuit patterns connected to input terminals and power supply terminals of said IC. Preferably, the value of said resistors formed as the circuit patterns connected to the power supply terminals is substantially lower than that of said resistors formed as the circuit patterns connected to the input terminals.

Thus, the invention as described herein makes possible the objectives of:

(1) providing a liquid crystal display apparatus in which the level of the voltage drop generated in a circuit pattern between a driving IC and an external apparatus can be effectively reduced;

(2) providing a liquid crystal display apparatus having a structure which can prevent the maloperation of a driving IC;

(3) providing a liquid crystal display apparatus which is excellent in image quality;

(4) providing a liquid crystal display apparatus in which the level of a power supply terminal does not become lower than that of an input terminal; and

(5) providing a liquid crystal display apparatus in which, even when one of driving ICs is faulty, the signal level of the faulty IC does not become excessive.

This invention will be further described, by way of example, with reference to the accompanying drawings, in which:-

Fig. 1A illustrates schematically one embodiment of the invention,

Fig. 1B shows the equivalent circuit diagram of the embodiment of Fig. 1A;

Fig. 2 is a detail plan view of another embodiment of the invention;

Figs. 3A is an enlarged plan view showing circuit patterns in the embodiment of Fig. 2;

Fig. 3B is a sectional view taken along the line B-B of Fig. 3A;

Fig. 4 shows the equivalent circuit of the portion shown in Fig. 3A;

Fig. 5A is an enlarged plan view showing circuit patterns in another embodiment of the invention;

Fig. 5B is a sectional view taken along the line b-b of Fig. 5A;

Fig. 6 shows the equivalent circuit of the portion shown in Fig. 5A;

Fig. 7 is a detail plan view of a further embodiment of the invention;

Fig. 8 is a detail plan view of a conventional liquid crystal display apparatus, and has already been described;

Fig. 9A illustrates schematically a circuit pattern of the apparatus of Fig. 8; and

Fig. 9B shows the equivalent circuit diagram of the apparatus of Fig. 9A.

As described above, the current flowing through a power supply terminal of a driving IC is larger than that flowing through a signal input terminal of the IC. Such a current consists of two components, i.e., a DC component, the level of which is constant, and an AC component, the level of which varies with time. Generally, the instantaneous value of the AC component is greater than that of the DC component. Hence, the operation of a driving IC can be stabilized by reducing the voltage drop caused by the AC component of the current flowing through a power supply terminal of a driving IC.

According to one aspect of the invention, a capacitor which is formed with the use of a circuit pattern connected to a power supply terminal of a driving IC is disposed between the circuit pattern and a reference potential level (usually, the ground level), thereby reducing the voltage drop caused by the AC component of the current flowing through the power supply terminal.

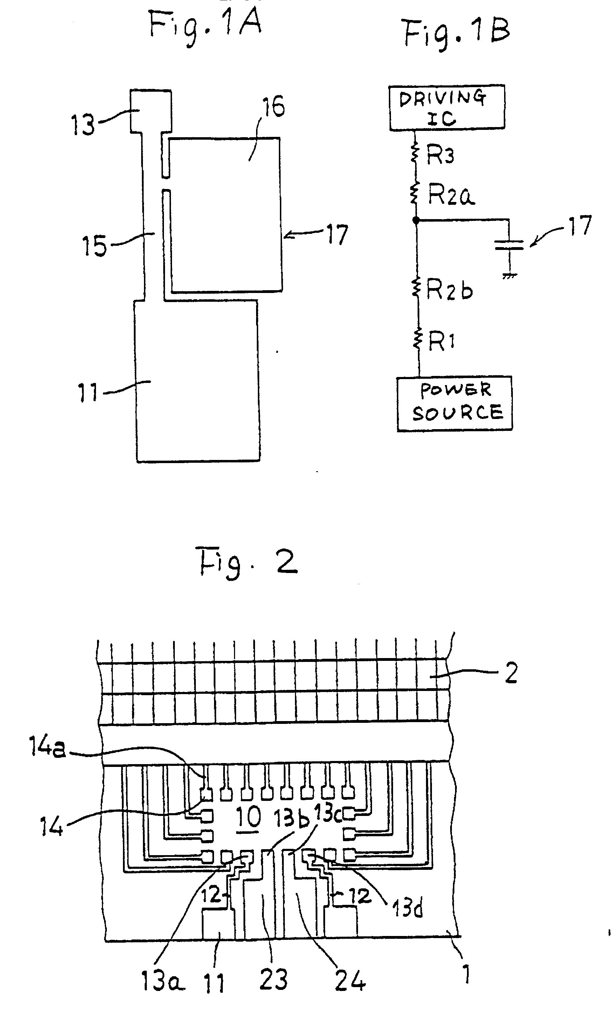

As shown in Figs. 1A and 1B, namely, a capacitor 17 is connected between the ground level and a circuit pattern 15 which extends across a land 13 to which a power supply terminal of a driving IC is connected and a pad 11 to which an external power supply aparatus is connected. One of the electrodes of the capacitor 17 is an extension 16 of the circuit pattern 15, and the other electrode is connected to the ground level. In the equivalent circuit of Fig. 1B, above-mentioned resistance $R_2$ is divided into two resistance components $R_{2a}$ and $R_{2b}$. Resistance $R_{2a}$ is the resistance of the portion of the circuit pattern 15 which stretches between the capacitor 17 and the land 13, and resistance $R_{2b}$ is the resistance of the portion of the circuit pattern 15 which exists between the capacitor·17 and the pad 11. The AC component of the current flowing through the circuit of Figure 1B is compensated by the discharge of the capacitor 17. Hence, the degree of the voltage drop caused by this current is determined on the basis of the combined resistance of resistance $R_{2a}$ and afore-mentioned contact resistance $R_3$. The value of the combined resistance ($R_{2a}$ + $R_3$) can be reduced by disposing the capacitor 17 at the vicinity of the land 13.

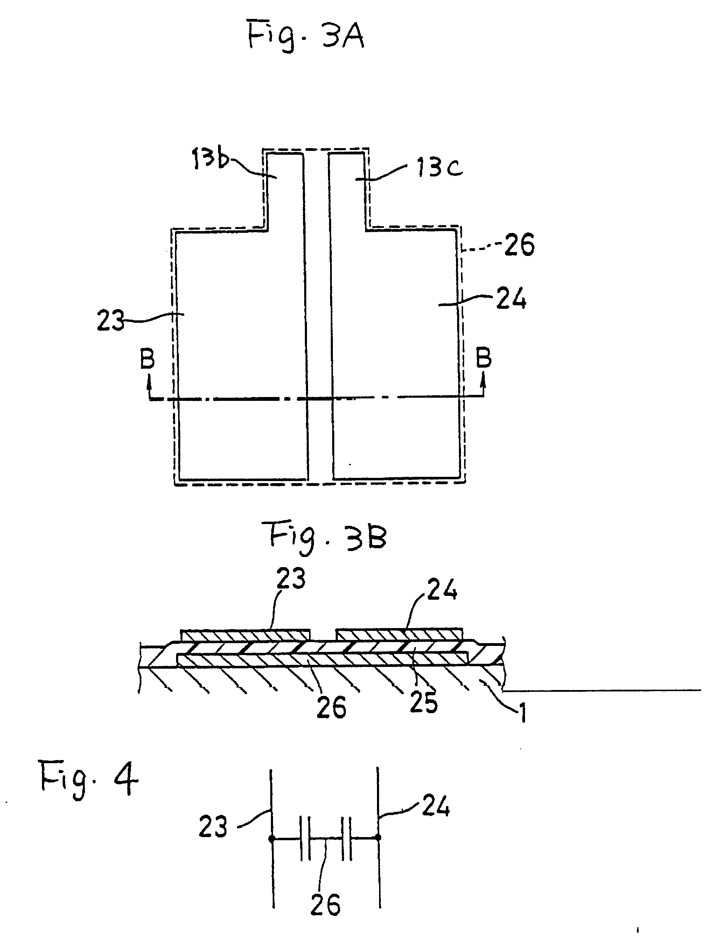

The invention will be described in more detail with reference to Figure 2. The apparatus shown in Figure 2 comprises a display portion 2 disposed on a liquid crystal display panel 1, and a IC mount area 10 at which a driving IC (not shown) is mounted. The IC mount area 10 is disposed at the periphery of the display panel 1, In the IC mount area 10, lands 13a to 13d and 14, circuit patterns 12, 14a, 23 and 24, and connecting pads 11 are formed. The lands 13a and 13d are to be connected to input terminals of a driving IC, and the lands 13b and 13c to power supply terminals of the driving IC. The lands 14 are to be connected to output terminals of the driving IC. The circuit patterns 12 connect the lands 13a and 13d with the connecting pads 11 to which lines from an external apparatus such as a signal input apparatus are connected. The circuit patterns 23 and 24 connect the lands 13b and 13c with the connecting pads 11 to which lines from a power supply apparatus are connected. The circuit patterns 14a connects the lands 14 with the display portion 2.

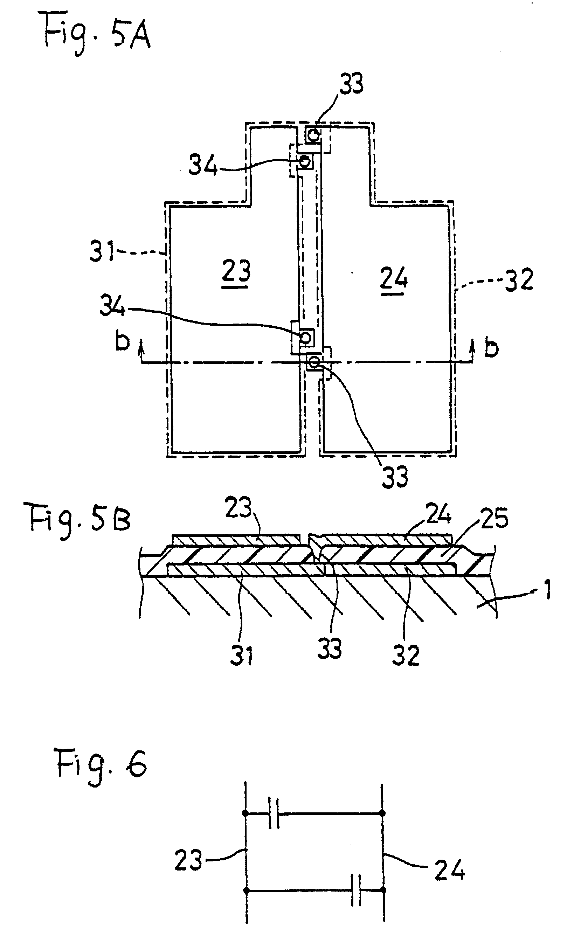

This embodiment is characterized in that capacitors are formed by using the circuit patterns 23 and 24 which are connected to the lands 13b and 13c (namely, to the power supply terminals of the driving IC). As shown in Figure 3A, the circuit patterns 23 and 24 are widened in a plan view to have a substantially larger area, and, as shown in Figure 3B, both the patterns 23 and 24 oppose via a dielectric layer 25 to an electode pattern 26 which is formed on the surface of the display panel 1. Namely, the circuit patterns 23, 24 and 24 function as electrodes of two capacitors in the equivalent circuit shown in Figure 4. As seen from Figure 4, two capacitors are connected in series between the circuit patterns 23 and 24. For example, the circuit pattern 23 is connected to the plus side of the power source, and the circuit pattern 24 is connected to the minus side of the power source. Hence, the AC component of the current flowing through the circuit patterns 33 and 34 (i.e., the power supply terminals of the driving IC) can be compensated by the discharge of the capacitors, thereby reducing the voltage drop caused by the current flowing through the circuit patterns 23 and 24.

Figure 5A shows another embodiment of the invention. In the embodiment, the electrode pattern formed on the display panel 1 is divided into two electrode patterns 31 and 32 which are electrically separated from each other. More specifically, the electrode pattern 31 is opposed via the dielectric layer 25 to the circuit pattern 23, the electrode pattern 32 opposes via the dielectric layer 25 to the circuit pattern 24. As shown in Figure 5B, the circuit pattern 24 is electrically connected to the electrode pattern 31 through two holes 33 which are formed in the dielectric layer 25. Similarly, the circuit pattern 23 is electrically connected to the electrode pattern 32 through two holes 34. As a result, in this embodiment, two capacitors are connected in parallel between the circuit patterns 23 and 24. When the circuit patterns 23 and 24 are respectively connected to the plus side and minus side of the power source, the AC component of the current flowing through the circuit patterns 23 and 24 (i.e., the power supply terminals of the driving IC) can be compensated by the discharge of the two parallel-connected capacitors, thereby reducing the voltage drop caused by the current flowing through the circuit patterns 23 and 24.

If the liquid crystal display panel 1 in the above-described embodiments is of the TFT (Thin Film Transistor) active matrix type, the capacitors can be formed in the same steps of producing the display panel 1. Namely, the electrode patterns 26, 31 and 32 can be formed when forming the first conductive layer (e.g., gate bus lines), and the circuit patterns 23 and 24 can be formed when forming the second conductive layer (e.g., source bus lines or picture element electrodes).

If the liquid crystal display panel 1 in the above-described embodiments is the one of the simple matrix type having electrodeposited color filters, the electrode patterns 26, 31 and 32 can be formed by the same material as that for the electrodeposited pattern of the color filters, the dielectric layer 25 by the material of the insulating film for the color filters, and the circuit patterns 23 and 24 by the same material as that for the circuit patterns formed on the color filters, resulting in that the capacitors also can be formed by the same steps of producing the display panel 1.

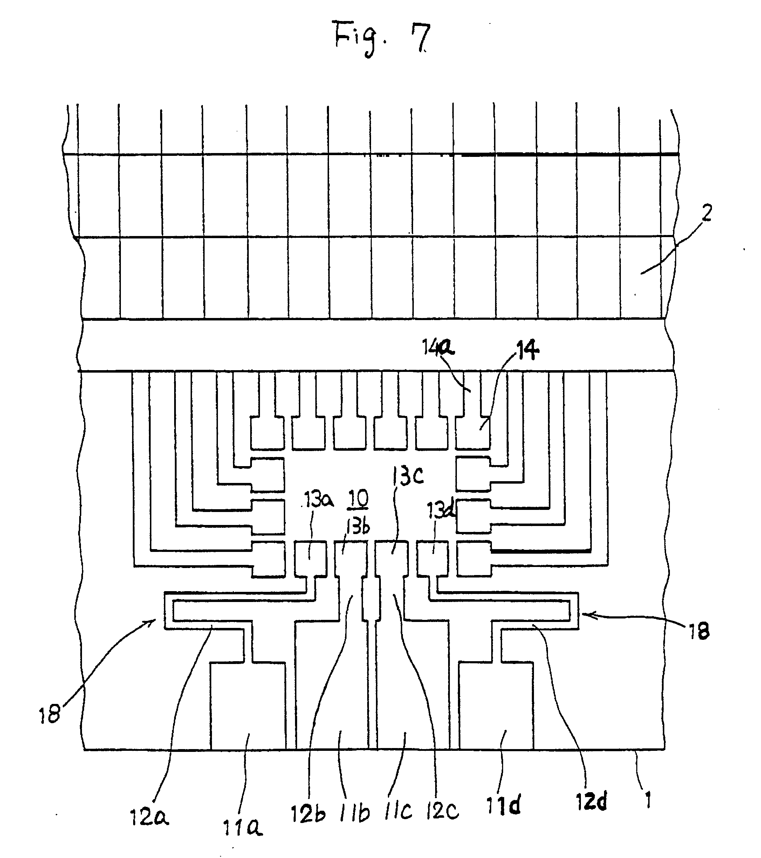

Figure 7 shows a further embodiment of the invention. The embodiment shown in Figure 7 comprises connecting pads 11a to 11d. The connecting pads 11a and 11d are to be connected with lines from a signal input apparatus, and the connecting pads 11b and 11c with lines from a power source. Between the connecting pads 11a to 11d and the lands 13a to 13d, circuit patterns 12a to 12d are formed respectively. In this embodiment, the circuit patterns 12a and 13d connected to the lands 13a and 13d (i.e. to the input terminals of the driving IC) are formed by a material which has a resistivity higher than that of the material for the other circuit patterns 12b and 12c, so that the circuit patterns 12a and 12d constitute protective resistors 18 for preventing an excessive input from entering into the IC. Alternatively, the protective resistors 18 may be composed of the connecting pads 11a and 11d, the circuit patterns 12a and 12d, and the lands 13a and 13d.

It is preferable that the protective resistors 18 are composed of a transparent conductive material such as ITO which is used as the material of the picture element electrodes of the display portion 2. The transparent conductive material is suitable for forming a circuit pattern having relatively large resistance, because it has a high resistivity, can be easily deposited on the panel by a spattering method or the like, and can be formed to a desired pattern by a photoetching technique. When the protective resistors 18 are formed by the same material as that of the picture element electrodes, the protective resistors 18 can be formed in the step of depositing the picture element electrodes, resulting in that there is no increase of production steps.

The values of the protective resistors 18 are suitably selected so that, when an input of the expected maximum level is applied to the pad 11a or 11d, the level at the land 13a or 13d (i.e., an input terminal of the IC) is lowered below the expected minimum level by the reduction of the input level caused by the protective resistor 18. The degree of this voltage drop can be obtained by multiplying the value of the protective resistor 18 and the value of the current flowing through the protective resistor 10 (i.e., the current supplied to an input terminal of the IC). Consequently, the higher the value the protective resistor 18, the less is the level at an input terminal. It is preferable to incorporate a circuit in the driving IC which is designed so as to increase the current flowing through an input terminal when the voltage level of a power supply terminal. This construction produces an advantage that the degree of the voltage drop caused by the protective resistor 18 can be effectively raised to more effectively prevent an excessive input from entering.

Even when one of the driving ICs connected to each other by a cascade line or the like becomes faulty, therefore, the excessive input level of the faulty IC can be prevented from being applied to other normal ICs, thereby preventing the sequential destruction of ICs.

In another embodiment, protective resistors 18 are formed also in the circuit patterns 12b and 12c which are connected to the lands 13b and 13c (i.e., to the power supply terminals of the driving IC). This configuration can reduce the current flowing through a power supply terminal so that the latch-up of the driving IC does not continue. It is necessary to set the resistor to have a value sufficient for discontinuing the latch-up. When the value of the resistor is excessively large, however, the voltage drop caused by the resistor causes the voltage level applied to a power supply terminal to be greatly lowered, resulting in the input level becoming excessive. Hence, the value of the protective resistors formed in the circuit patterns 12b and 12c must be substantially lower than that of the protective resistors formed in the circuit patterns 12a and 12d. The protective resistors 18 formed in circuit patterns 12a and 12d may be composed of the same material as the circuit patterns 14a.

According to a further aspect of the invention, two or more of the configurations of the embodiments of Figures 1A, 3A, 5A and 7 can be combined adequately.

Various other modifications can be readily made without departing from the scope of this invention.

## Claims

1. A liquid crystal display apparatus comprising: a liquid crystal display panel (2); an IC disposed on said display panel and incorporating a driving circuit for driving said display panel; and a circuit pattern (12,14a) connected to a terminal of said IC, characterised in that said display apparatus an impedance means (17,18) is electrically connected to said circuit pattern.

2. A display apparatus according to claim 1, wherein said terminal is a power supply terminal of said IC, and said impedance means comprises a capacitor (17,23,24).

3. A display apparatus according to claim 2, wherein one (17) of the electrodes of said capacitor consists of a portion of said circuit pattern.

4. A display apparatus according to claim 2 or 3, wherein said impedance means comprises two or more capacitors (23,24).

5. A display apparatus according to claim 4, wherein said capacitors are connected in series.

6. A display apparatus according to claim 5, wherein said capacitors are connected in parallel.

7. A display apparatus according to any of claims 1 to 6, wherein said terminal is a power supply terminal of said IC, and said impedance means comprises a resistor (18).

8. A display apparatus according to claim 7 wherein said resistor is formed as a portion of said circuit pattern.

9. A display apparatus according to claim 7, wherein said resistor is formed by a transparent conductive material.

10. A liquid crystal display apparatus comprising: a liquid crystal display panel (2); an IC disposed on said display panel and incorporating a driving circuit for driving said display panel; and a plurality of circuit patterns (12a-12d, 14a) connected to terminals of said IC, characterised in that said display apparatus further comprises resistors (18) which are formed in said circuit patterns.

11. A display apparatus according to claim 10, wherein said resistors (18) are formed as the circuit patterns connected to input terminals (13a,13d) of said IC.

12. A display apparatus according to claim 10, wherein said resistors are formed as the circuit patterns connected to input terminals (13a,13d) and power supply terminals 13b,13c) of said IC.

13. A display apparatus according to claim 12, wherein the value of said resistors formed as the circuit patterns (12b,12c) connected to the power supply terminals (13b,13c) is substantially lower than that of said resistors formed as the circuit patterns (12a,12d) connected to the input terminals (13a,13d).

# Fig. 1A

# Fig. 1B

13

16

15

17

11

DRIVING
IC

R3

R2a

17

R2b

R1

POWER
SOURCE

# Fig. 2

2

14a

14

10    13b  13c

12

13a  11    23    24    12   13d

1

Fig. 3A

Fig. 3B

Fig. 4

Fig. 5A

Fig. 5B

Fig. 6

Fig. 7

Fig. 8

Fig. 9A

Fig. 9B